# EUROPÄISCHE PATENTANMELDUNG

(11) **EP 4 035 808 A1**
(43) Veröffentlichungstag der Anmeldung: **03.08.2022**
(21) Anmeldenummer: 21154495.2
(22) Anmeldetag: 01.02.2021
(51) Int. Cl.: B23B 27/10, B23B 29/03, B23C 5/20, B23C 5/28, B33Y 80/00, B23C 5/22

(54) **SCHNEIDELEMENT UND ZERSPANUNGSWERKZEUG**

(71) Anmelder: KOMET Deutschland GmbH, 74354 Besigheim (DE)
(72) Erfinder: EDELMANN, Karl-Heinz, 74354 Besigheim (DE); SCHMID, Frank, 74354 Besigheim (DE)
(74) Vertreter: Ciesla, Dirk

(57) **Zusammenfassung**

Ein Schneidelement (1, 100) für ein Zerspanungswerkzeug (1000), wobei das Schneidelement (1, 100) einen Trägerkörper (2, 120) und einen Schneidkörper (3, 130) hat, wobei der Schneidkörper (3, 130) eine Oberseite (32, 320), eine Unterseite (33, 330) und eine zwischen der Oberseite (32, 320) und der Unterseite (33, 330) umlaufende Seitenfläche (34, 340) hat, wobei die Oberseite (32, 320) von dem Trägerkörper (2, 120) abgewandt ist, wobei die Unterseite (33, 330) dem Trägerkörper (2, 120) zugewandt ist, wobei die Schneidkante (30, 131) durch einen Übergang von der Seitenfläche (34, 340) zur Oberseite (32, 320) gebildet ist, wobei der Schneidkörper (3, 130) mit dem Trägerkörper (2, 120) stoffschlüssig verbunden ist, wobei der Trägerkörper (2, 120) eine innere Trägerkanalstruktur (4) hat, wobei die Trägerkanalstruktur (4) einen mit der Eintrittsöffnung (41) fluidkommunizierenden Austrittskanal (42) hat und wobei der Austrittskanal (42) zur Kühlmittelversorgung des Schneidkörpers (3, 130) ausgebildet und angeordnet ist.

## Beschreibung

Die vorliegende Erfindung betrifft ein Schneidelement für ein Zerspanungswerkzeug, wobei das Schneidelement einen Trägerkörper und einen Schneidkörper hat, wobei der Schneidkörper aus einem Schneidkörpermaterial besteht und der Trägerkörper aus einem Trägerkörpermaterial besteht, wobei das Schneidkörpermaterial von dem Trägerkörpermaterial verschieden ist, wobei der Schneidkörper eine freistehende Schneidkante hat, wobei der Trägerkörper zum reversibel lösbaren Verbinden mit einem Werkzeuggrundkörper und zum Einsetzen in einen Trägerkörpersitz des Werkzeuggrundkörpers ausgebildet ist, wobei der Schneidkörper eine Oberseite, eine Unterseite und eine zwischen der Oberseite und der Unterseite umlaufende Seitenfläche hat, wobei die Oberseite von dem Trägerkörper abgewandt ist, wobei die Unterseite dem Trägerkörper zugewandt ist, wobei die Schneidkante durch einen Übergang von der Seitenfläche zur Oberseite gebildet ist.

Die vorliegende Erfindung betrifft ferner ein Zerspanungswerkzeug, wobei das Zerspanungswerkzeug einen Werkzeuggrundkörper und mindestes ein Schneidelement hat.

Aus der EP2986407 A1 ist ein Rotationswerkzeug bekannt.

Beim Gebrauch des aus der EP2986407 A1 bekannten Rotationswerkzeugs entstehen Späne und Wärme staut sich. Dadurch werden die Schneidleistung und die Lebensdauer des Rotationswerkzeugs reduziert.

Die Aufgabe der vorliegenden Erfindung könnte also darin gesehen werden, ein Schneidelement und ein Zerspanungswerkzeug bereitzustellen, mit denen die Spanabfuhr und Kühlung verbessert werden.

Die technische Aufgabe der vorliegenden Erfindung wird durch ein Schneidelement für ein Zerspanungswerkzeug gemäß Anspruch 1 und ein Zerspanungswerkzeug gemäß Anspruch 12 gelöst. Vorteilhafte Weiterbildungen der Erfindung sind den abhängigen Ansprüchen, die untereinander frei kombinierbar sind, der Beschreibung und den Figuren zu entnehmen.

Gemäß der vorliegenden Erfindung hat das Schneidelement für ein Zerspanungswerkzeug einen Trägerkörper und einen Schneidkörper, wobei der Schneidkörper aus einem Schneidkörpermaterial besteht und der Trägerkörper aus einem Trägerkörpermaterial besteht, wobei das Schneidkörpermaterial von dem Trägerkörpermaterial verschieden ist, wobei der Schneidkörper eine freistehende Schneidkante hat, wobei der Trägerkörper zum reversibel lösbaren Verbinden mit einem Werkzeuggrundkörper und zum Einsetzen in einen Trägerkörpersitz des Werkzeuggrundkörpers ausgebildet ist, wobei der Schneidkörper eine Oberseite, eine Unterseite und eine zwischen der Oberseite und der Unterseite umlaufende Seitenfläche hat, wobei die Oberseite von dem Trägerkörper abgewandt ist, wobei die Unterseite dem Trägerkörper zugewandt ist, wobei die Schneidkante durch einen Übergang von der Seitenfläche zur Oberseite gebildet ist, wobei der Schneidkörper mit dem Trägerkörper stoffschlüssig verbunden ist, wobei der Trägerkörper eine innere Trägerkanalstruktur hat, wobei die Trägerkanalstruktur eine Eintrittsöffnung für einen Kühlmitteleintritt hat, wobei die Trägerkanalstruktur einen mit der Eintrittsöffnung fluidkommunizierenden Austrittskanal hat und wobei der Austrittskanal zur Kühlmittelversorgung des Schneidkörpers ausgebildet und angeordnet ist.

Der Austrittskanal sorgt dafür, dass ein Kühlmittel zu dem Schneidkörper gelangen kann, so dass der Schneidkörper bei der Zerspanung gekühlt wird und zugleich bei der Zerspanung erzeugte Späne von dem Schneidkörper wegtransportiert werden können.

Im Gegensatz zu einer Kühlmittelversorgung des Schneidkörpers direkt aus dem Werkzeuggrundkörper, dessen Herstellung üblicherweise aufwendiger ist als die des Trägerkörpers, kann durch die in dem Trägerkörper realisierte Trägerkanalstruktur eine an die jeweils vorgegebene Geometrie des Schneidkörpers angepasste Kühlmittelversorgung bereitgestellt werden.

Indem der Schneidkörper mit dem Trägerkörper stoffschlüssig verbunden ist, wird ein direkter Wärmeeintrag in den Werkzeuggrundkörper vermieden, der entstehen würde, wenn der Schneidkörper mit dem Werkzeuggrundkörper direkt stoffschlüssig verbunden wäre. Das erfindungsgemäße Schneidelement hat also den Vorteil, dass der Werkzeuggrundkörper beim Bestücken mit dem Schneidkörper keine thermische Belastung und keinen Verzug erfährt sowie dass das Gefüge des Werkzeuggrundkörpers nicht verändert und eine thermisch bedingte Verfärbung einer Oberfläche des Werkzeuggrundkörpers vermieden werden. Der Werkzeuggrundkörper kann also im Falle einer Bestückung mit dem erfindungsgemäßen Schneidelement maßhaltig bleiben sowie seine Festigkeit und optischen Eigenschaften beibehalten.

Dass der Schneidkörper mit dem Trägerkörper stoffschlüssig verbunden ist, bedeutet zum Beispiel, dass der Schneidkörper an den Trägerkörper gelötet ist, wonach der Trägerkörper und der Schneidkörper durch ein von dem Schneidkörpermaterial und dem Trägerkörpermaterial jeweils verschiedenes Lötmaterial verbunden sind. Denkbar und auch möglich ist es aber auch, dass der Schneidkörper an den Trägerkörper geschweißt ist.

Das erfindungsgemäße Schneidelement ist für ein Zerspanungswerkzeug ausgebildet. Bei dem Zerspanungswerkzeug kann es sich zum Beispiel um ein Aufbohrwerkzeug handeln, also ein Zerspanungswerkzeug, welches dazu ausgebildet ist, eine in einem Werkstück bereits erzeugte Bohrungsfläche zu bearbeiten, zum Beispiel einen Bohrungsdurchmesser der Bohrungsfläche zu erweitern und/oder die Bohrungsfläche mit einer Fase zu versehen. Die vorliegende Erfindung ist aber nicht auf ein solches Aufbohrwerkzeug beschränkt.

Der Schneidkörper hat die Oberseite und die der Oberseite gegenüberliegende Unterseite sowie die umlaufende Seitenfläche, wobei die Seitenfläche die Oberseite mit der Unterseite verbindet. Die Schneidkante ist durch den Übergang von der Seitenfläche zur Oberseite gebildet. Die Oberseite ist dem Trägerkörper abgewandt, die Unterseite dem Trägerkörper zugewandt. Die Seitenfläche kann mindestens eine Facette haben.

Der Trägerkörper hat vorzugsweise einen in den Trägerkörper eingelassenen Schneidkörpersitz, wobei der Schneidkörpersitz eine der Seitenfläche abschnittsweise folgend ausgebildete Stützfläche hat, wobei die Stützfläche zum Stützen des Schneidkörpers ausgebildet und angeordnet ist.

Weil der Schneidkörper mit dem Trägerkörper stoffschlüssig verbunden ist, ist es nicht weiter erforderlich, dass der Schneidkörper durch ein mechanisches Befestigungselement, zum Beispiel ein Schraubenelement, mit dem Trägerkörper verbunden ist. Der Schneidkörper kann daher ausnehmungsfrei ausgebildet sein.

Das Schneidkörpermaterial ist vorzugsweise härter als das Trägerkörpermaterial, weil dies für die Zerspanung von metallischen Werkstücken vorteilhaft ist.

Dass die Schneidkante freistehend ist, bedeutet, dass die Oberseite und die Seitenfläche jeweils zumindest dort, wo die Oberseite und die Seitenfläche ineinander zur Bildung der Schneidkante übergehen, zum Trägerkörper kontaktfrei sind.

Vorteilhafterweise ist die Schneidkante gerade, wonach sie Schneidkante unter anderem nicht aus einzelnen, zueinander beabstandeten Schneidzähnen gebildet ist.

Dass der Trägerkörper zum reversibel lösbaren Verbinden mit dem Werkzeuggrundkörper ausgebildet ist, bedeutet, dass der Trägerkörper durch ein mechanisches Befestigungselement an dem Werkzeuggrundkörper fixiert werden kann, zum Beispiel durch ein Schraubenelement oder eine Spannpratze.

Dass der Trägerkörper zum Einsetzen in einen Trägerkörpersitz des Werkzeuggrundkörpers ausgebildet ist, bedeutet, dass der Trägerkörper von dem Werkzeuggrundkörper zumindest abschnittsweise räumlich-körperlich aufgenommen werden kann.

Der Schneidkörper ist vorzugsweise plattenförmig ausgebildet. Vorzugsweise ist die Oberseite des Schneidkörpers bündig zu einer Oberseite des Trägerkörpers ausgebildet und angeordnet.

Gemäß einer Weiterbildung des erfindungsgemäßen Schneidelements verläuft der Austrittskanal zumindest abschnittsweise räumlich gekrümmt. Dadurch lässt sich der Austrittskanal an die Geometrie und die Abmessungen des Trägerkörpers anpassen. So kann das Kühlmittel also zum Beispiel beim Durchströmen durch die Trägerkanalstruktur umgelenkt werden. Ferner lässt sich die durch den Austrittskanal bereitgestellte Kühlmittelversorgung des Schneidkörpers an die Geometrie der Schneidkante anpassen, indem der Austrittskanal zumindest abschnittsweise räumlich gekrümmt verläuft.

Gemäß einer Weiterbildung des erfindungsgemäßen Schneidelements ist der Austrittskanal aufseiten der Schneidkante zum auf die Unterseite gerichteten Kühlmittelaustritt ausgebildet und angeordnet, wobei der Austrittskanal eine Austrittsöffnung hat, wobei die Austrittsöffnung eine Öffnung des Trägerkörpers ist. So wird nach dieser Weiterbildung eine kompakte sowie indirekte Kühlmittelversorgung der Schneidkante bereitgestellt.

Gemäß einer Weiterbildung des erfindungsgemäßen Schneidelements mündet der Austrittskanal in eine Einbuchtung des Trägerkörpers. Dadurch wird ein besonders kompakter Aufbau des erfindungsgemäßen Schneidelements bereitgestellt. So kann der Schneidkörper einen axialen Vorsprung des erfindungsgemäßen Schneidelements bilden, wobei der Kühlmittelaustritt hinter dem axialen Vorsprung liegt. Ein solcher axialer Vorsprung ist besonders zweckmäßig, wenn die Schneidkante als Stirnseitenschneidkante an dem Zerspanungswerkzeug ausgebildet und angeordnet ist.

Gemäß einer Weiterbildung des erfindungsgemäßen Schneidelements hat die Trägerkanalstruktur einen weiteren Austrittskanal, wobei der weitere Austrittskanal zum Kühlmittelaustritt weg von dem Schneidkörper ausgebildet und angeordnet ist, wobei der weitere Austrittskanal eine Austrittsöffnung hat und wobei die Austrittsöffnung des weiteren Austrittskanals eine weitere Öffnung des Trägerkörpers ist. Dies hat den Vorteil, dass die in einem Spanraum des Werkzeuggrundkörpers bei der Zerspanung angesammelten Späne von der Schneidkante wegtransportiert werden können. Vorzugsweise ist die Austrittsöffnung des weiteren Austrittskanals aufseiten der Oberseite des Schneidkörpers ausgebildet.

Gemäß einer Weiterbildung des erfindungsgemäßen Schneidelements verläuft der weitere Austrittskanal zumindest abschnittsweise räumlich gekrümmt. Damit sind die für den zumindest abschnittsweise räumlich gekrümmt verlaufenden Austrittskanal beschriebenen Vorteile für den weiteren Austrittskanal analog verwirklicht.

Gemäß einer Weiterbildung des erfindungsgemäßen Schneidelements hat der weitere Austrittskanal eine innere Strömungsabrisskante. Dies hat den Vorteil, dass eine Kühlmittelströmung nach der Passage der Strömungsabrisskante strömungsberuhigt wird, also kontrollierter in zum Beispiel einen Spanraum eintreten kann. Die Strömungsabrisskante kann zum Beispiel durch einen stufenartigen Übergang in dem weiteren Austrittskanal ausgebildet sein, so dass das Kühlmittel von einem ersten Strömungsquerschnitt des weiteren Austrittskanals in einen zweiten Strömungsquerschnitt des weiteren Austrittskanals eintritt, wobei der zweite Strömungsquerschnitt betragsmäßig größer ist als der erste Strömungsquerschnitt, wobei der zweite Strömungsquerschnitt zwischen dem ersten Strömungsquerschnitt und der Austrittsöffnung des weiteren Austrittskanals angeordnet ist. Die Strömungsabrisskante kann vorzugsweise in dem weiteren Austrittskanal umlaufend geschlossen ausgebildet sein, weil dies den strömungsberuhigenden Effekt vergrößert.

Gemäß einer Weiterbildung des erfindungsgemäßen Schneidelements ist der Schneidkörper in den Trägerkörper eingelassen angeordnet, so dass der Trägerkörper der Seitenfläche des Schneidkörpers zumindest abschnittsweise umfänglich folgt. Dies hat den Vorteil, dass der Trägerkörper den Schneidkörper beim zum Beispiel Eindringen des Schneidkörpers in ein Werkstück abstützt.

Gemäß einer Weiterbildung des erfindungsgemäßen Schneidelements besteht das Schneidkörpermaterial im Wesentlichen aus Diamantpartikeln, wobei die Diamantpartikel aneinander gesintert sind. Die Diamantpartikel verleihen dem Schneidkörper eine besonders große Härte, was für das Zerspanen von metallischen Werkstücken vorteilhaft ist. Die Diamantpartikel können eine zusammenhängende Skelettstruktur bilden, wobei die Skelettstruktur Zwischenräume hat, wobei die Zwischenräume mit einem metallischen Bindermaterial gefüllt sind. Der Anteil des Bindermaterials ist vorzugsweise größer oder gleich 75 Gewichtsprozent, noch mehr bevorzugt größer oder gleich 80 Gewichtsprozent, am meisten bevorzugt größer oder gleich 90 Gewichtsprozent. Denkbar und auch möglich ist es aber auch, dass die Diamantpartikel eine andere Mikrostruktur bilden, d. h. insbesondere eine Mikrostruktur ohne mit dem Bindermaterial gefüllte Zwischenräume.

Gemäß einer Weiterbildung des erfindungsgemäßen Schneidelements hat der Trägerkörper eine außerhalb des Schneidkörpers ausgebildete Durchgangsausnehmung. Die Durchgangsausnehmung ermöglicht es, dass ein Befestigungselement in den Trägerkörper durchgeführt angeordnet werden kann und mit dem Werkzeuggrundkörper reversibel lösbar verbunden wird. Die Durchgangsausnehmung kann zum Beispiel eine zentrale Ausnehmungsachse haben, wobei die Ausnehmungsachse im Wesentlichen parallel zur Schneidkante angeordnet ist.

Gemäß einer Weiterbildung des erfindungsgemäßen Schneidelements ist der Austrittskanal zumindest abschnittsweise additiv hergestellt. Dies hat den Vorteil, dass der Austrittskanal insbesondere zumindest abschnittsweise räumlich gekrümmt verlaufen kann. Vorzugsweise ist der Trägerkörper und damit die Trägerkanalstruktur additiv hergestellt. Additiv hergestellt bedeutet, dass ein Ausgangspulvermaterial, zum Beispiel ein Stahlpulver, schichtweise aufgeschmolzen wird und schichtweise erstarrt, und zwar gemäß eines vorgegebenen Strukturmodells. Das Aufschmelzen kann zum Beispiel durch einen Laserstrahl realisiert werden.

Die Aufgabe wird auch durch ein Zerspanungswerkzeug nach Anspruch 12 gelöst.

Gemäß der vorliegenden Erfindung hat das Zerspanungswerkzeug einen Werkzeuggrundkörper und mindestes ein Schneidelement nach Anspruch 1 oder nach einem der von Anspruch 1 abhängigen Ansprüche, wobei das Schneidelement in einem Trägerkörpersitz des Werkzeuggrundkörpers angeordnet ist, wobei der Trägerkörpersitz dem Trägerkörper zumindest abschnittsweise umfänglich folgend ausgebildet ist, wobei das Schneidelement mit dem Werkzeuggrundkörper reversibel lösbar verbunden ist, wobei der Werkzeuggrundkörper eine Grundkörperkanalstruktur hat, wobei die Trägerkanalstruktur mit der Grundkörperkanalstruktur fluidkommunizierend verbunden ist. Dadurch werden die für das erfindungsmäße Schneidelement beschriebenen Vorteile bei dem Zerspanungswerkzeug realisiert. Das Zerspanungswerkzeug hat eine Längsachse, wobei sich das Zerspanungswerkzeug entlang der Längsachse axial erstreckt. Bei einer Drehung des Zerspanungswerkzeugs um die Längsachse kann die Oberseite des Schneidkörpers in Drehrichtung zeigen. Denkbar und auch möglich ist es aber auch, dass die Seitenfläche des Schneidkörpers in Drehrichtung zeigt. Die Schneidkante des Schneidkörpers kann vorzugsweise einen axialen Vorsprung des erfindungsgemäßen Zerspanungswerkzeugs bilden, wonach die Schneidkante eine Stirnseitenschneidkante ist.

Gemäß einer Weiterbildung ist das erfindungsgemäße Zerspanungswerkzeug als Aufbohrwerkzeug ausgebildet, wobei das Schneidelement zum Bearbeiten einer Bohrungsoberfläche angeordnet und ausgebildet ist. So kann das erfindungsgemäße Zerspanungswerkzeug die Bohrungsoberfläche so bearbeiten, dass ein Bohrdurchmesser vergrößert wird und/oder eine Fase in der Bohrungsoberfläche erzeugt wird.

Gemäß einer Weiterbildung hat das als Aufbohrwerkzeug ausgebildete erfindungsgemäße Zerspanungswerkzeug ein weiteres Schneidelement, wobei das weitere Schneidelement zum Bearbeiten einer durch das Schneidelement erzeugten Bohrungsoberfläche angeordnet und ausgebildet ist, wobei das weitere Schneidelement bezüglich einer Längsachse des als Aufbohrwerkzeug ausgebildeten Zerspanungswerkzeugs jeweils zum Schneidelement axial versetzt und radial weiter außen angeordnet ist. Dies hat den Vorteil, dass das erfindungsgemäße Zerspanungswerkzeug mehrere Bearbeitungsstufen bezüglich einer Bohrung bereitstellt. So kann die Schneidkante des Schneidkörpers von dem Schneidelement einen axialen Vorsprung des erfindungsgemäßen Zerspanungswerkzeugs bilden, wobei der axiale Vorsprung über eine Stirnseite des Werkzeuggrundkörpers hinausragt, wobei die Schneidkante senkrecht zur Längsachse ausgerichtet ist. Gleichzeitig kann das weitere Schneidelement eine Schneidkante haben, die von der Schneidkante des Schneidelements verschieden ausgerichtet ist, um zum Beispiel eine Fase in der durch das Schneidelement erzeugten Bohrungsoberfläche zu erzeugen. Indem das weitere Schneidelement radial weiter außen angeordnet ist, sind das weitere Schneidelement und Schneidelement auf verschiedenen Flugkreisen angeordnet. Dabei ist es vorteilhaft, wenn eine bezüglich des weiteren Schneidelements radial am weitesten außen liegende Ecke des Schneidkörpers des weiteren Schneidelements bezüglich der Längsachse radial weiter außen liegt als eine bezüglich des Schneidelements radial am weitesten außen liegende Ecke.

Das weitere Schneidelement kann dem Schneidelement analog ausgebildet sein. Besonders zweckmäßig ist es dabei, wenn das Schneidelement den weiteren Austrittskanal aufweist, so dass ein optionaler Spanraum des Werkzeuggrundkörpers mit dem Kühlmittel geflutet werden kann.

Gemäß einer Weiterbildung hat das als Aufbohrwerkzeug ausgebildete erfindungsgemäße Zerspanungswerkzeug ein Befestigungselement, wobei das Befestigungselement in den Trägerkörper durchgeführt angeordnet ist und mit dem Werkzeuggrundkörper reversibel lösbar verbunden ist. Das Befestigungselement kann zum Beispiel als Schraube ausgebildet sein, wobei ein Schraubenkopf des Befestigungselements gegen den Trägerkörper anschlägt und ein Gewinde des Befestigungselements mit dem Werkzeuggrundkörper unterhalb der Unterseite des Schneidkörpers verschraubt ist.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische perspektivische Ansicht eines Schneidelements gemäß einer Ausführungsform;
- Fig. 2:: eine weitere schematische perspektivische Ansicht des Schneidelements aus Fig. 1;
- Fig. 3;: eine schematische Seitenansicht des Schneidelements aus Fig. 1;
- Fig. 4:: eine schematische Aufsicht des Schneidelements aus Fig. 1;
- Fig. 5:: eine schematische Aufsicht der Trägerkanalstruktur des Schneidelements aus Fig. 1;
- Fig. 6:: eine schematische perspektivische Ansicht der Trägerkanalstruktur aus Fig. 5;
- Fig. 7:: eine schematische Seitenansicht der Trägerkanalstruktur aus Fig. 5;
- Fig. 8:: eine schematische perspektivische Ansicht eines Schneidelements gemäß einer weiteren Ausführungsform;
- Fig. 9:: eine schematische perspektivische Ansicht eines Zerspanungswerkzeugs gemäß einer Ausführungsform;
- Fig. 10:: eine schematische Stirnseitenansicht des Zerspanungswerkzeugs aus Fig. 9;
- Fig. 11:: eine Schnittdarstellung gemäß den Linien J-J in Fig. 10; und
- Fig. 12:: eine Schnittdarstellung gemäß den Linien K-K in Fig. 10.

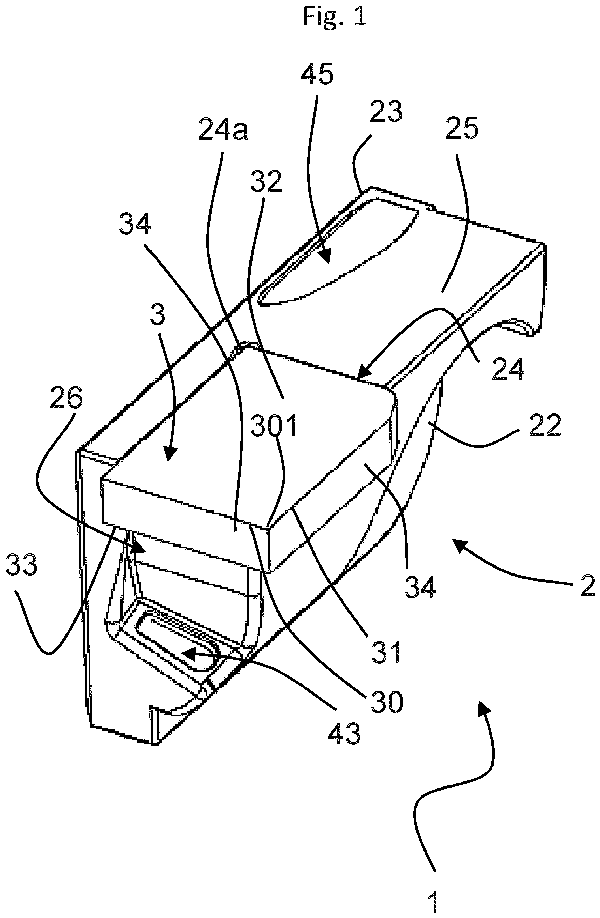

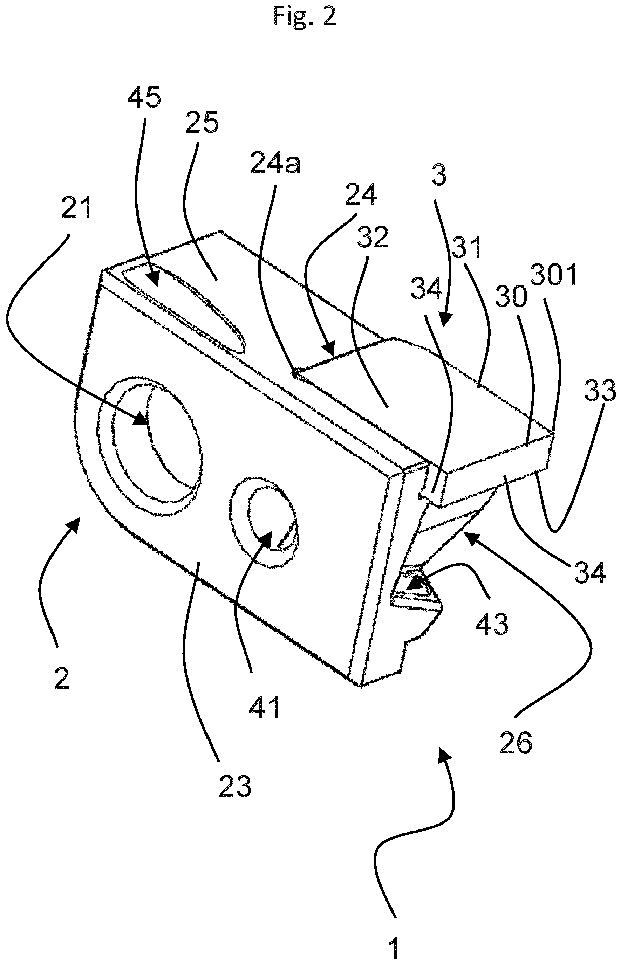

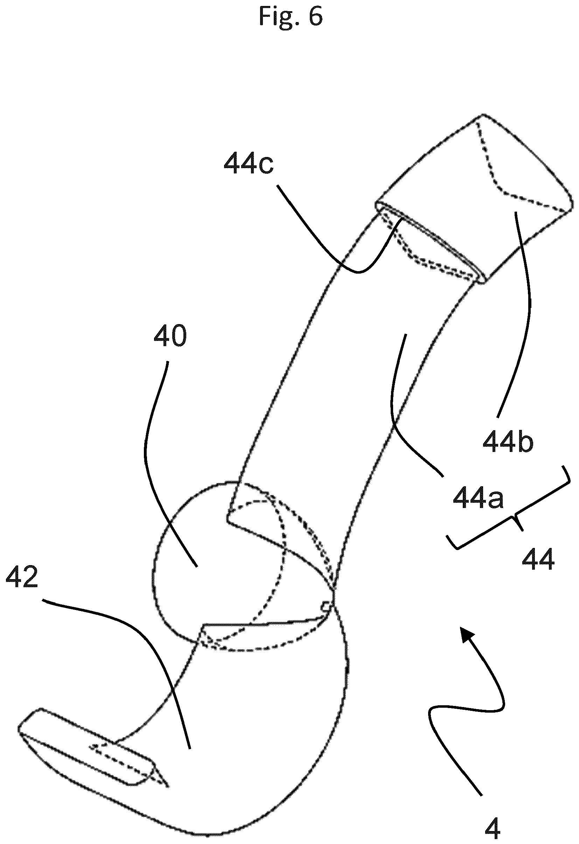

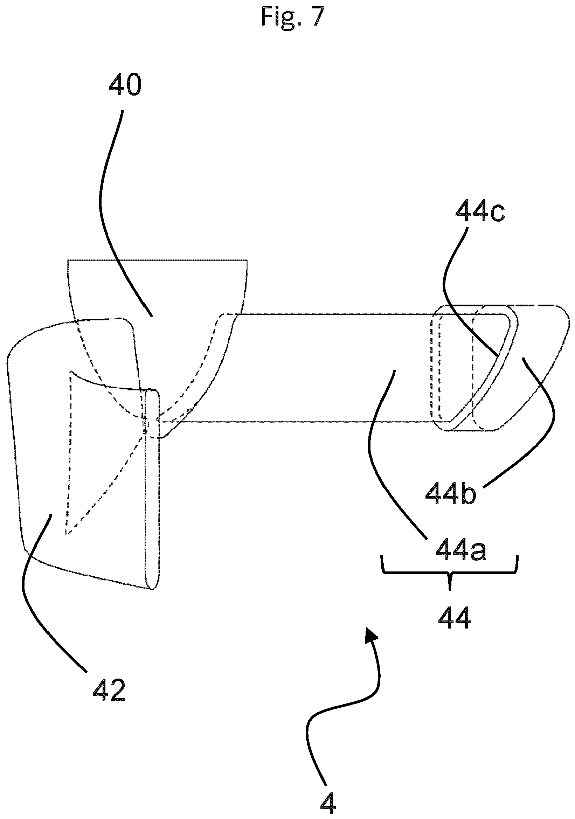

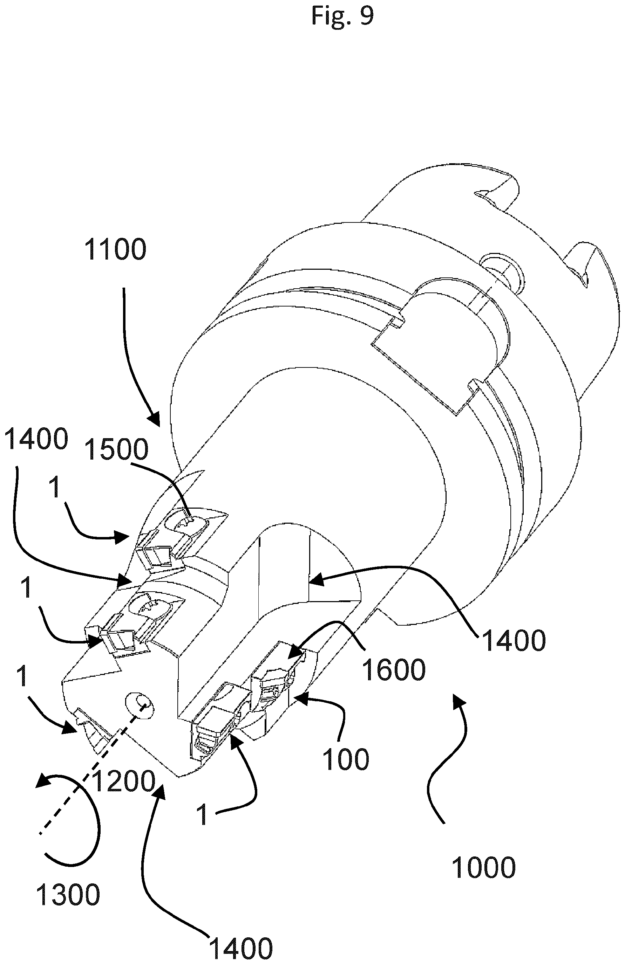

Im Folgenden werden zwei Ausführungsformen des erfindungsgemäßen Schneidelements unter Bezugnahme auf die Figuren 1 bis 8 und eine Ausführungsform des erfindungsgemäßen Zerspanungswerkzeugs, welches exemplarisch als Aufbohrwerkzeug ausgebildet ist, unter Bezugnahme auf die Figuren 9 bis 12 beschrieben.

Wie in den Figuren 1 bi 4 zu sehen ist, hat ein Schneidelement 1 einen Trägerkörper 2 und einen Schneidkörper 3. Der Schneidkörper 3 besteht aus einem Schneidkörpermaterial, und zwar exemplarisch aus im Wesentlichen aneinander gesinterten Diamantpartikeln. Der Trägerkörper 2 besteht aus einem von dem Schneidkörpermaterial verschiedenen Trägerkörpermaterial, und zwar exemplarisch aus einem Stahl. Der Trägerkörper 2 ist dabei exemplarisch additiv hergestellt, und zwar durch schichtweises Laserschmelzen eines Stahlpulvers, wobei das Stahlpulver nach jedem schichtweisen Aufschmelzen erstarrt.

Der Schneidkörper 3 hat eine freistehende gerade Schneidkante 30 und eine senkrecht dazu angeordnete freistehende und gerade Schneidkante 31; die Schneidkante 31 ist exemplarisch länger als die Schneidkante 30. Die Schneidkante 30 kann als Stirnseitenschneidkante beim Aufbohren einer Bohrung verwendet werden, wonach die Schneidkante 31 die durch die Schneidkante 30 erzeugte Bohrungsoberfläche seitlich glättet. Die Schneidkanten 30 und 31 schließen einen Schneidkantenwinkel ein, wobei der Schneidkantenwinkel 90° beträgt. Denkbar und auch ist aber auch ein anderer Schneidkantenwinkel, wonach die Schneidkanten 30 und 31 zum Beispiel zur Erzeugung einer Fase in einer Bohrungsoberfläche verwendet werden können.

Der Trägerkörper 2 ist zum reversibel lösbaren Verbinden mit einem Werkzeuggrundkörper ausgebildet, indem der Trägerkörper 2 eine Durchgangsausnehmung 21 hat, in welche ein Befestigungselement, zum Beispiel eine Schraube, durchgeführt werden kann, wobei das Befestigungselement gegen eine Anschlagsfläche 22 des Trägerkörpers 2 anschlägt und aufseiten einer Auflageseite 23 des Trägerkörpers 2 in den Werkzeuggrundkörper eingeschraubt ist. Die Auflageseite 23 kontaktiert dabei eine Grundfläche eines Trägerkörpersitzes des Werkzeuggrundkörpers. Die Durchgangsausnehmung 21 hat eine nicht dargestellte zentrale Längsachse, wobei diese Längsachse senkrecht zur Auflageseite 23 angeordnet ist.

Der Schneidkörper 3 hat eine Oberseite 32, eine Unterseite 33 und eine zwischen der Oberseite 32 und der Unterseite 33 umlaufende sowie facettierte Seitenfläche 34. Die Oberseite 32 ist von dem Trägerkörper 2 abgewandt. Die Unterseite 33 ist dem Trägerkörper 3 zugewandt. Die Schneidkanten 30 und 31 sind jeweils durch einen Übergang von der Seitenfläche 34 auf die Oberseite 32 gebildet. Die Schneidkanten 30 und 31 gehen ineinander unter Bildung einer Schneidecke 301 über.

Der Schneidkörper 3 ist in einem Plattensitz 24 des Trägerkörpers 2 angeordnet, also in den Trägerkörper 2 eingelassen angeordnet. Der Trägerkörper 2 folgt dabei im Bereich des Plattensitzes 24 der Seitenfläche 34 entlang von zwei Facetten der Seitenfläche 34. Der Plattensitz 24 hat eine Verrundung 24a, um eine Kerbwirkung auf den Schneidkörper 3 beim Schneiden mit dem Schneidkörper 3 zu reduzieren; an einem Boden des Plattensitzes 24, welcher die Unterseite 33 kontaktiert, verläuft eine Verrundung einem Übergang von der Unterseite 33 zu der Seitenfläche 34 folgend, um auch dort eine Kerbwirkung zu reduzieren.

Die Oberseite 32 ist exemplarisch mit einer Oberseite 25 des Trägerkörpers 2 bündig angeordnet, weil dies für den Spantransport weg von der Schneidkante 30 vorteilhaft ist.

Der Schneidkörper 3 ist mit dem Trägerkörper 2 stoffschlüssig verbunden, und zwar exemplarisch aufseiten des Plattensitzes 24 durch ein Lötmaterial.

Das Schneidelement 1 kann aber auch mit einem anderen Schneidkörper stoffschlüssig verbunden werden, wobei der andere Schneidkörper eine von dem Schneidkörper 3 abweichende Form haben kann, zum Beispiel quadratisch oder sonst wie polygonal. Dafür muss lediglich die Form des Plattensitzes 24 an die andere Form angepasst werden.

Der in den Figuren 1 bis 4 gezeigte Schneidkörper 3 befindet sich in einem Rohzustand, d. h. insbesondere, dass mindestens eine freistehende Ecke, einschließlich der Schneidecke 301, und/oder mindestens eine freistehende Kante, einschließlich der Schneidkanten 30 und 31, und/oder die Seitenfläche 34 dort, wo sie freisteht, jeweils mit einer anderen Geometrie versehen werden können, am besten in einem mit einem Werkzeuggrundkörper reversibel lösbar verbundenen Zustand des Schneidelements 1, zum Beispiel durch Funkenerosion und/oder laserunterstützte Materialabtragung von dem Schneidkörper 3. So kann die Seitenfläche 34 aufseiten der Schneidkante 30 mit einem anderen Freiwinkel versehen werden (in den Figuren 1 bis 4 beträgt aufseiten der Schneidkante 30 der Freiwinkel 0°). Analoges gilt für die Seitenfläche 34 aufseiten der Schneidkante 31. Ferner kann die Schneidecke 301 verrundet werden und/oder mit einer Fase versehen werden. Denkbar und auch möglich ist es ferner, dass die Seitenfläche 34 mit einer oder mehreren Fasen, zum Beispiel einer Rundschlifffase aufseiten der Schneidkante 31, versehen wird.

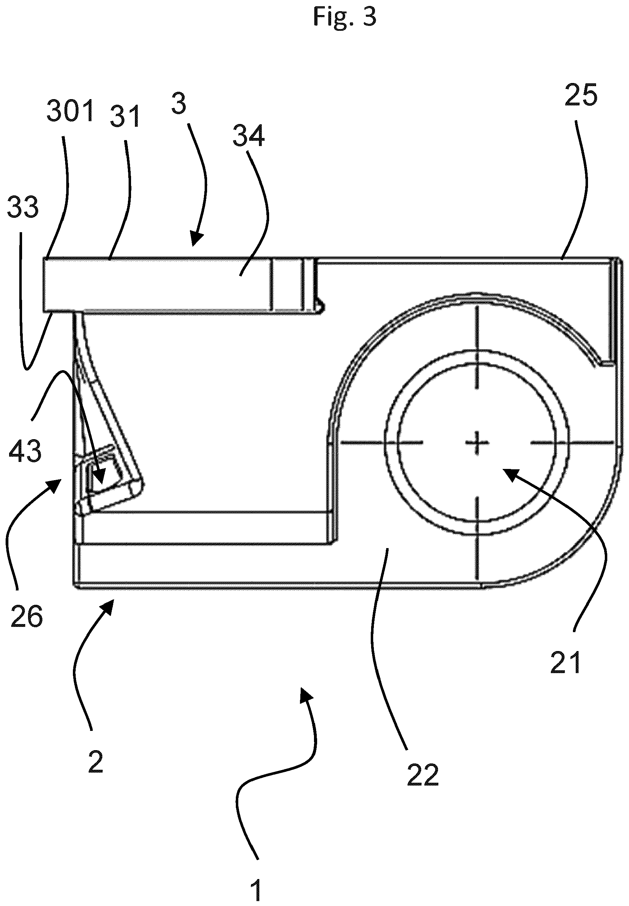

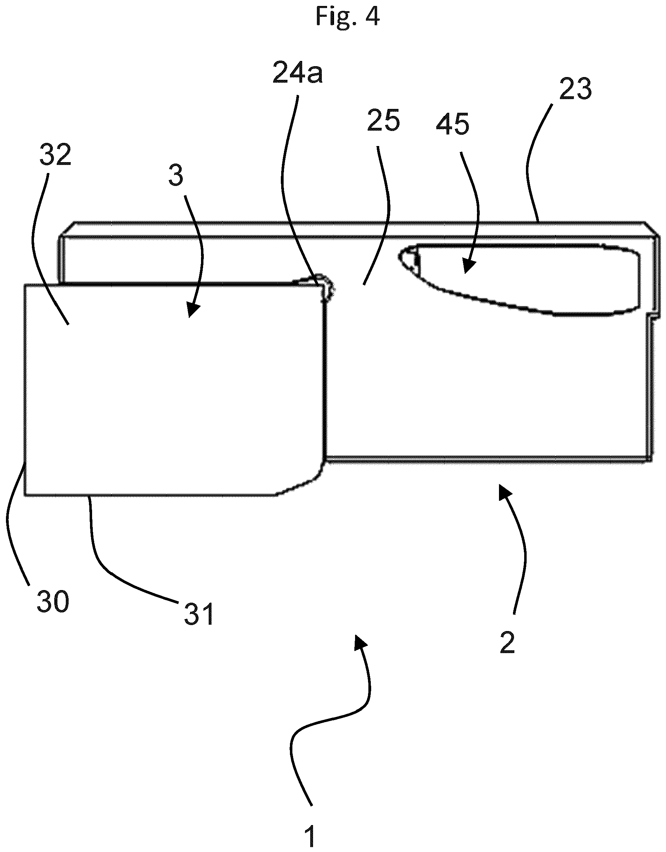

In Fig. 3 ist besonders gut zu erkennen, dass der Schneidkörper 3 über den Trägerkörper 2 aufseiten der Schneidkante 30 hinausragt, in Fig. 4, dass der Schneidkörper 3 über den Trägerkörper 2 aufseiten der Schneidkante 31 hinausragt, sodass sich der Schneidkörper 3 im Bereich der Schneidkanten 30 und 31 durch einen Laserstrahl bearbeiten lässt, ohne dass dabei Material vom dem Trägerkörper 2 durch den Laserstrahl abgetragen wird.

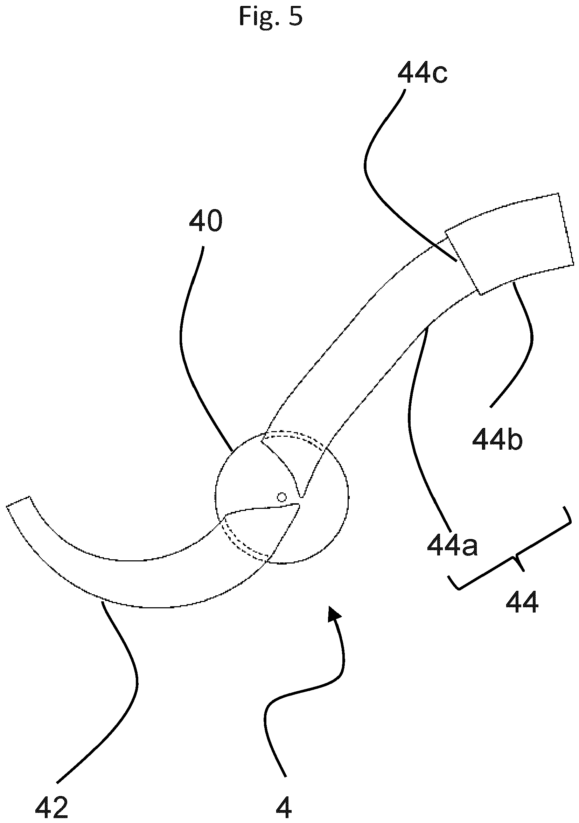

Die Figuren 5 bis 7 zeigen eine innere Trägerkanalstruktur 4 des Schneidelements 1, die Figuren 1 bis 4 dabei, wo das Kühlmittel aus der Trägerkanalstruktur 4 bezüglich des Schneidelements 1 austritt.

Die Trägerkanalstruktur 4 hat einen kuppelförmigen Einspeisekanal 40. Der Einspeisekanal 40 hat eine Eintrittsöffnung 41 und verläuft in dem Trägerkörper 2 unterhalb der Unterseite 32, die Eintrittsöffnung 41 ist also zugleich eine Öffnung des Trägerkörpers 2. Die Eintrittsöffnung 41 ist in der Auflageseite 23 angeordnet.

Die Trägerkanalstruktur 4 hat einen Austrittskanal 42. Der Austrittskanal 42 zweigt von dem Einspeisekanal 41 ab, verläuft räumlich gekrümmt innerhalb von dem Trägerkörper 2 und mündet in eine Austrittsöffnung 43. Die Austrittsöffnung 43 ist innerhalb einer Einbuchtung 26 des Trägerkörpers 2 angeordnet, die Austrittsöffnung 43 ist also eine Öffnung des Trägerkörpers 2.

Der Austrittskanal 42 ist räumlich so gekrümmt und die Einbuchtung 26 so angeordnet, dass das Kühlmittel aus dem Austrittskanal 42 auf den Schneidkörper 3 gerichtet austreten kann, und zwar auf die Unterseite 33 in Richtung auf die Schneidecke 301, also dort, wo der Schneidkörper 1 beim Schneiden in ein Werkstück üblicherweise die größte thermische Belastung erfährt.

Die Figuren 5 bis 7 zeigen den Austrittskanal 42 virtuell über die Austrittsöffnung 43 hinaus verlängert. In den Figuren 1 bis 4 endet der Austrittskanal 42 also an der Austrittsöffnung 43, also dort, wo der Trägerkörper 2 den Austrittskanal 42 schneidet.

Die Trägerkanalstruktur 4 hat einen weiteren Austrittskanal 44. Der Austrittskanal 44 zweigt von dem Einspeisekanal 40 ab, verläuft räumlich gekrümmt innerhalb von dem Trägerkörper 2 und mündet in eine Austrittsöffnung 45. Die Austrittsöffnung 45 ist in der Oberseite 25 angeordnet, die Austrittsöffnung 45 ist also eine Öffnung des Trägerkörpers 2.

Der Austrittskanal 44 ist räumlich so gekrümmt und die Austrittsöffnung 45 so angeordnet, dass das Kühlmittel aus dem Austrittskanal 44 in Richtung weg von dem Schneidkörper 3 aus dem Trägerkörper 2 austreten kann, was für die Flutung eines zu dem Schneidelement 1 benachbarten Spanraums besonders zweckmäßig ist.

Der Austrittskanal 44 hat einen ersten räumlich gekrümmt verlaufenden Kanalabschnitt 44a und einen zweiten räumlich gekrümmt verlaufenden Kanalabschnitt 44b. Der erste Kanalabschnitt 44a hat einen Strömungsquerschnitt. Der zweite Kanalabschnitt 44b hat ebenfalls einen Strömungsquerschnitt, wobei der Strömungsquerschnitt des ersten Kanalabschnitts 44a kleiner ist als der Strömungsquerschnitt des zweiten Kanalabschnitts 44b. Der erste Kanalabschnitt 44a geht dabei unter einer stufenartigen Erweiterung in den zweiten Kanalabschnitt 44b über, wobei eine umlaufende Strömungsabrisskante 44c innerhalb des Austrittskanals 44 gebildet wird. Wenn das Kühlmittel von dem Einspeisekanal 40 durch den Austrittskanal 44 strömt, kommt es zu einem Strömungsabriss an der Strömungsabrisskante 44c, was zu einer Beruhigung der Strömung führt, wonach das Kühlmittel fokussierter aus der Austrittsöffnung 45 austritt.

Die Figuren 4 bis 7 zeigen den Austrittskanal 44 virtuell über die Austrittsöffnung 45 hinaus verlängert. In den Figuren 1 bis 4 endet der Austrittskanal 44 also an der Austrittsöffnung 45, also dort, wo der Trägerkörper 2 den Austrittskanal 44 im Bereich des Kanalabschnitts 44b schneidet.

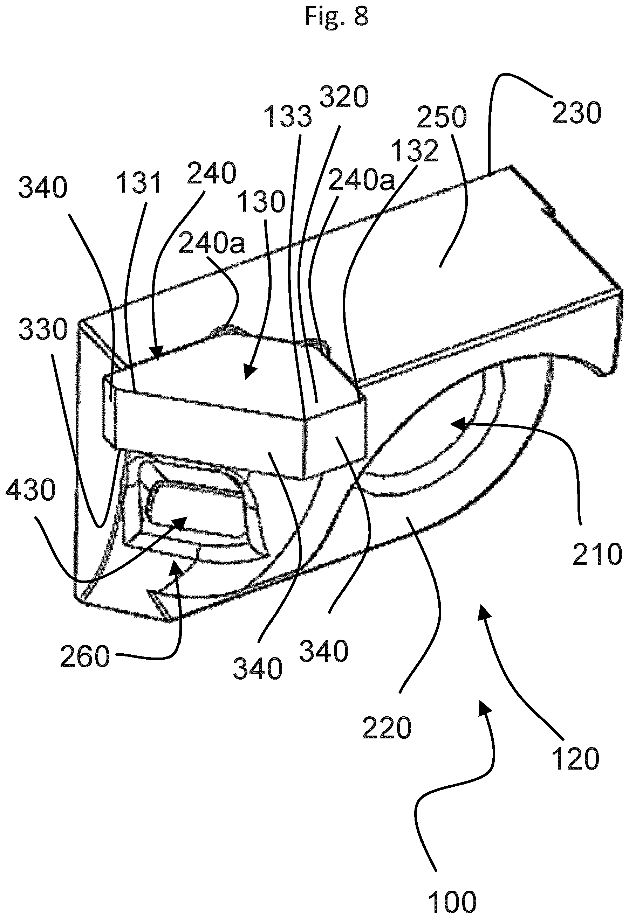

Fig. 8 zeigt ein Schneidelement 100 nach einer weiteren Ausführungsform. Das Schneidelement 100 hat einen Trägerkörper 120 und einen Schneidkörper 130. Der Schneidkörper 130 besteht aus dem zum Schneidkörpermaterial des Schneidkörpers 3 gleichen Schneidkörpermaterial, der Trägerkörper 130 aus dem zum Trägerkörpermaterial des Trägerkörpers 3 gleichen Trägerkörpermaterial. Der Trägerkörper 130 ist dem Trägerkörper 3 analog additiv hergestellt.

Der Schneidkörper 130 hat eine freistehende gerade Schneidkante 131 und eine im Vergleich zur Schneidkante 131 kürzere Schneidkante 132, wobei die Schneidkanten 131 und 132 unter Bildung einer Schneidecke 133 ineinander übergehen. Die Schneidkanten 131 und 132 schließen einen Schneidkantenwinkel ein, wobei der Schneidkantenwinkel exemplarisch 135° beträgt. Denkbar und auch möglich ist aber auch ein anderer Schneidkantenwinkel im Bereich von größer 90° bis kleiner 180°. Die Schneidkanten 131 und 132 sind also zum Erzeugen einer Fase in einer Bohrungsoberfläche angeordnet.

Der Schneidkörper 130 hat also eine von dem Schneidkörper 3 verschiedene Form. So ist der Schneidkörper 3 rechteckig und der Schneidkörper 130 anders polygonal, indem von einem virtuellen Rechteck zwei gegenüberliegende Kanten abgeschnitten wurden.

Der Schneidkörper 130 hat eine Oberseite 320, eine Unterseite 330 und eine zwischen der Oberseite 320 und der Unterseite 330 umlaufende sowie facettierte Seitenfläche 340. Die Oberseite 320 ist von dem Trägerkörper 120 abgewandt. Die Unterseite 330 ist dem Trägerkörper 3 zugewandt. Die Schneidkanten 131 und 132 sind jeweils durch einen Übergang von der Seitenfläche 340 zur Oberseite 320 gebildet.

Der Schneidkörper 130 ist dem Schneidkörper 3 analog in einem Plattensitz 240 des Trägerkörpers 120 angeordnet, also in den Trägerkörper 120 eingelassen angeordnet. Der Trägerkörper 120 folgt dabei im Bereich des Plattensitzes 240 der Seitenfläche 340 entlang von drei Facetten der Seitenfläche 340. Der Plattensitz 240 hat zwei Verrundungen 240a, um eine Kerbwirkung auf den Schneidkörper 130 beim Schneiden mit dem Schneidkörper 130 zu reduzieren; an einem Boden des Plattensitzes 240, welcher die Unterseite 330 kontaktiert, verläuft eine Verrundung einem Übergang von der Unterseite 330 zu der Seitenfläche 340 folgend, um auch dort eine Kerbwirkung zu reduzieren.

Die Oberseite 320 ist exemplarisch mit einer Oberseite 250 des Trägerkörpers 2 bündig angeordnet, weil dies für den Spantransport weg von der Schneidkante 131 vorteilhaft ist.

Der Schneidkörper 130 ist mit dem Trägerkörper 120 stoffschlüssig verbunden, und zwar exemplarisch aufseiten des Plattensitzes 240 durch ein Lötmaterial.

Der Trägerkörper 120 hat dem Trägerkörper 2 analog eine Durchgangsausnehmung 210, in welche ein Befestigungselement, zum Beispiel eine Schraube, durchgeführt werden kann, wobei das Befestigungselement gegen eine Anschlagsfläche 220 des Trägerkörpers 120 anschlägt und aufseiten einer Auflageseite 230 des Trägerkörpers 120 in den Werkzeuggrundkörper eingeschraubt werden kann. Die Auflageseite 230 kontaktiert dabei eine Grundfläche eines Trägerkörpersitzes des Werkzeuggrundkörpers.

Der Schneidkörper 130 befindet sich dem Schneidkörper 3 analog in einem Rohzustand und kann daher dem Schneidkörper 3 analog in einem mit einem Werkzeuggrundkörper reversibel lösbar verbundenen Zustand des Schneidelements 100 bearbeitet werden.

Der Trägerkörper 120 hat dem Trägerkörper 2 analog eine Trägerkanalstruktur, wobei die Trägerkanalstruktur der Trägerkörperkanalstruktur 4 analog ausgebildet ist, mit den Unterschieden, dass ein dem Austrittskanal 44 analoger Austrittskanal nicht realisiert ist und dass ein dem Austrittskanal 42 analoger Austrittskanal in eine Austrittsöffnung 430 des Trägerkörpers 120 mündet. Die Austrittsöffnung 430 ist innerhalb einer Einbuchtung 260 des Trägerkörpers 120 angeordnet.

Der dem Austrittskanal 42 analoge Austrittskanal der Trägerkanalstruktur des Trägerkörpers 120 ist räumlich so gekrümmt und die Einbuchtung 260 ist so angeordnet, dass das Kühlmittel aus dem dem Austrittskanal 42 analogen Austrittskanal der Trägerkanalstruktur des Trägerkörpers 120 auf den Schneidkörper 130 gerichtet austreten kann, und zwar auf die Unterseite 330 aufseiten der Schneidkante 131.

Die Figuren 9 bis 12 zeigen ein Zerspanungswerkzeug 1000 nach einer Ausführungsform. Das Zerspanungswerkzeug 1000 hat einen Grundkörper 1100. Der Grundkörper 1100 erstreckt sich entlang einer Längsachse 1200 und ist mit mehreren der Schneidelemente 1 sowie mit dem Schneidelement 100 bestückt. Drei der Schneidelemente 1 sind bezüglich des Werkzeuggrundkörpers 1100 stirnseitig auf gleicher axialer Position untereinander bezüglich der Längsachse 1200 angeordnet, wobei die jeweilige Schneidkante 30 der Schneidelemente 1 axial über den Werkzeuggrundkörper hinausragt. Zu den so stirnseitig angeordneten Schneidelementen 1 sind axial weiter nach hinten versetzt zwei weitere der Schneidelemente 1 und das Schneidelement 100 angeordnet, und zwar so, dass die axial weiter nach hinten angeordneten Schneidelemente 1 und das Schneidelement 100 bezüglich der Längsachse 1200 radial weiter außen angeordnet sind als die stirnseitig angeordneten Schneidelemente 1 und zugleich untereinander auf gleicher axialer Position bezüglich der Längsachse 1200 angeordnet sind.

Bei einer bestimmungsgemäßen Verwendung des Zerspanungswerkzeugs 1000 wird das Zerspanungswerkzeug 1000 in eine Drehrichtung 1300 um die Längsachse 1200 gedreht. Die Oberseiten 32 und die Oberseite 320 eilen also den Unterseiten 33 bzw. der Unterseite 330 bei einer solchen Drehung voraus.

Wird das Zerspanungswerkzeug 1000 unter der beschriebenen Drehung in die Drehrichtung 1300 in eine bereits erzeugte Bohrung eines Werkstücks parallel zur Längsachse 1200 eingeführt, können die stirnseitig angeordneten Schneidelemente 1 eine Bohrungsoberfläche der Bohrung bearbeiten, so dass sich ein Bohrungsdurchmesser vergrößert. Die Längsachse 1200 ist dabei fluchtend mit einer zentralen Achse der Bohrung angeordnet.

Wird das Zerspanungswerkzeug 1000 unter der beschriebenen Drehung parallel zur Längsachse 1200 noch weiter in die Bohrung eingeführt, können die axial weiter nach hinten angeordneten Schneidelemente 1 und das Schneidelement 100 die durch die stirnseitig angeordneten Schneidelemente 1 erzeugte Bohrungsoberfläche bearbeiten, so dass der Bohrungsdurchmesser weiter vergrößerter wird und durch das Schneidelement 100 eine umlaufende Fase in die Bohrung erzeugt wird. Das Zerspanungswerkzeug 1000 ist also exemplarisch als Aufbohrwerkzeug mit zwei Bohrstufen ausgebildet. Die erste Bohrstufe wird durch die stirnseitigen Schneidelemente 1 und ihre Anordnung an dem Werkzeuggrundkörper 1100 gebildet, die zweite Bohrstufe durch die axial weiter nach hinten versetzten Schneidelemente 1 und das Schneidelement 100 und ihre jeweilige Anordnung an dem Werkzeuggrundkörper 1100.

Der bezüglich der Figuren 1 bis 8 beschriebene Kühlmittelaustritt aus den Schneidelementen 1 und dem Schneidelement 100 sorgt beim Aufbohren mit dem Zerspanungswerkzeug 1000 dafür, dass die Schneidkörper 3 bzw. der Schneidkörper 130 während des Bohrens gekühlt werden und Späne aufgrund der Ausrichtung der Austrittskanäle 42 entgegen der Drehrichtung 1300 aus der Bohrung fortgespült werden.

Die Austrittskanäle 44 sorgen dabei dafür, dass ein jeweils zu den Austrittskanälen 44 benachbarter Spanraum 1400 des Werkzeuggrundkörpers 1100 mit dem Kühlmittel entgegen einer Vorschubrichtung tiefer in die Bohrung hinein geflutet werden; die Spanräume 1400 erstrecken sich jeweils parallel zur Längsachse 1200 und sind jeweils nutenförmig ausgebildet.

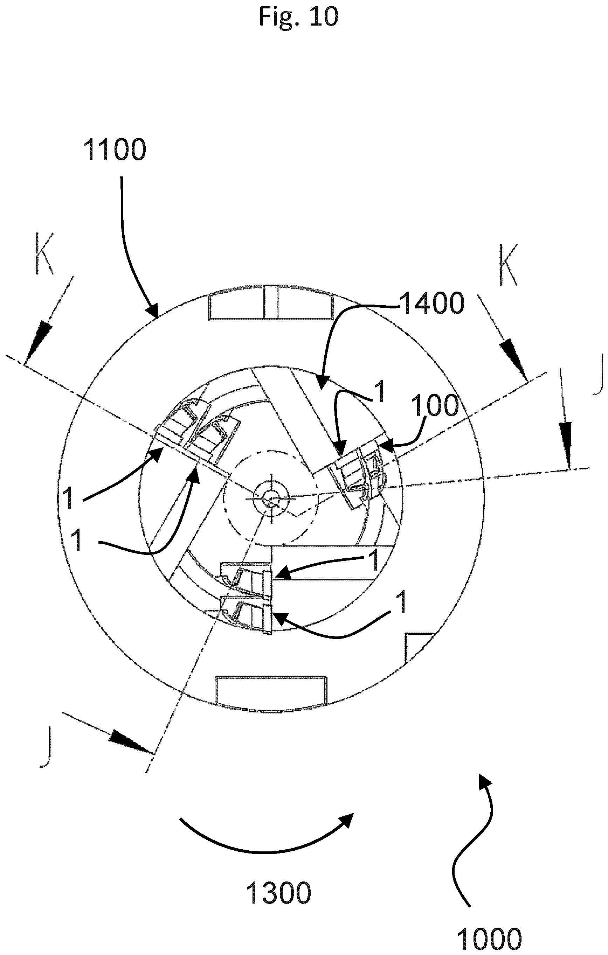

Wie die Zusammenschau der Figuren 9 und 10 zeigt, ist jedem der stirnseitig angeordneten Schneidelemente 1 eines der axial weiter nach hinten angeordneten Schneidelemente 1 bzw. das Schneidelement 100 in Blickrichtung parallel zur Längsachse 1200 fluchtend angeordnet.

In Figur 9 ist zu erkennen, dass die Schneidkörper 3 jeweils exemplarisch angefaste Ecken und Kanten haben, wonach die Schneidkörper 3 in dem in Figur 9 gezeigten reversibel lösbar verbundenen Zustand der Schneidelemente 1 ausgehend von dem beschriebenen Rohzustand bearbeitet wurden.

Die Schneidelemente 1 bzw. das Schneidelement 100 sind jeweils durch eine Schraube 1500 (aus Gründen der Übersichtlichkeit ist nur eine der insgesamt sechs Schrauben 1500 mit dem Bezugszeichen 1500 versehen) mit dem Werkzeuggrundkörper 1100 reversibel lösbar verbunden, indem jede der Schrauben 1500 in eine der Durchgangsausnehmungen 21 bzw. 210 durchgeführt angeordnet ist. Die jeweilige Oberseite 25 bzw. 250 ragt dabei in radialer Richtung bezüglich der Längsachse 1200 über den jeweiligen Teil der Schrauben 1500 hinaus, der sich außerhalb des Trägerkörpers 2 bzw. 120 befindet.

Jeder der Trägerkörper 2 bzw. der Trägerkörper 120 ist durch eine der Schrauben 1500 in einem Trägerkörpersitz 1600 des Werkzeuggrundkörpers 1100 fixiert (aus Gründen der Übersichtlichkeit ist nur einer der insgesamt sechs Trägerkörpersitze 1600 mit dem Bezugszeichen 1600 versehen). Die Trägerkörpersitze 1600 bilden jeweils einen axialen Anschlag sowie einen tangentialen Anschlag bezüglich der von den Trägerkörpersitzen 1600 aufgenommenen Trägerkörper 2 bzw. 120.-

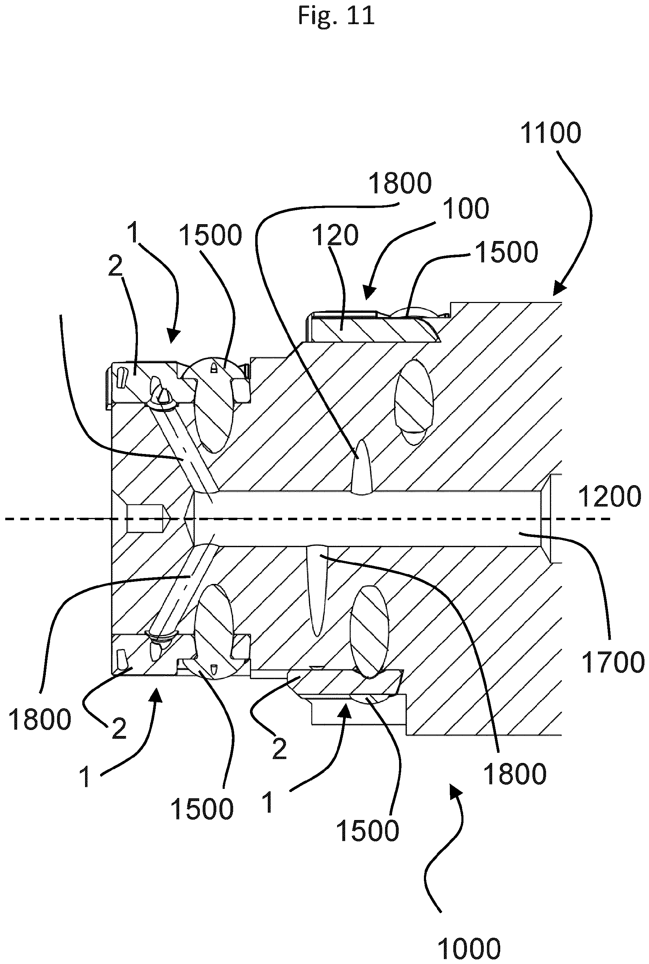

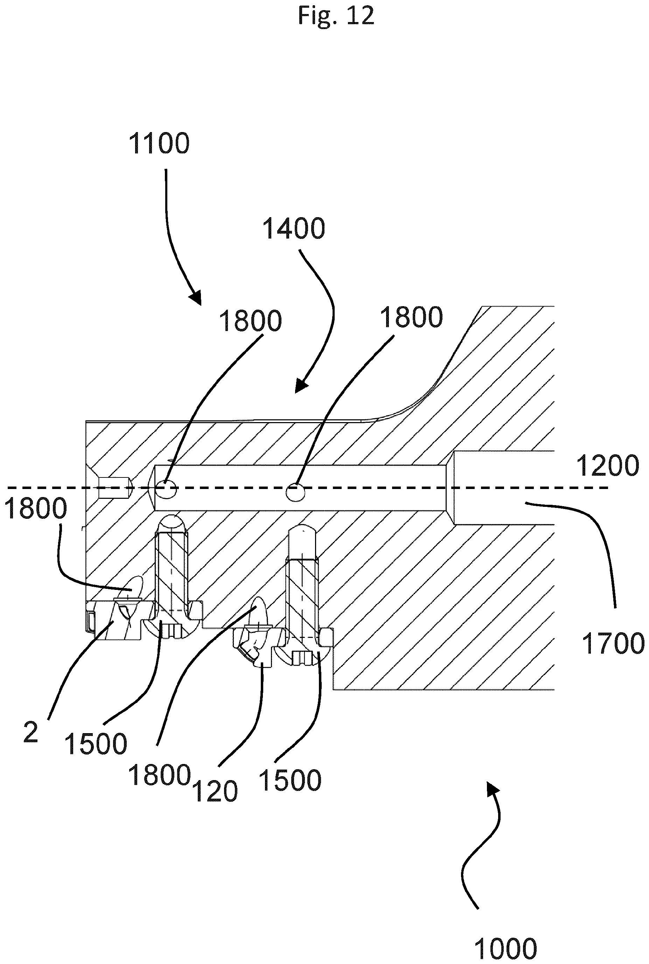

Die Schnittdarstellungen aus den Figuren 11 und 12 zeigen, dass die Trägerkanalstrukturen 4 der Schneidelemente 1 und die Trägerkanalstruktur des Schneidelements 100 jeweils mit einer sich parallel zur Längsachse 1200 erstreckenden und damit geraden Kühlmittelbohrung 1700 des Werkzeuggrundkörpers 1100 fluidkommunizierend verbunden sind, indem von der Kühlmittelbohrung 1700 zu jeder Eintrittsöffnung 41 (das Schneidelement 100 hat eine der Eintrittsöffnung 41 analog ausgebildete und angeordnete Eintrittsöffnung) ein gerader Versorgungskanal 1800 abzweigt. Die Versorgungskanäle 1800 schließen mit der Längsachse 1200 jeweils aufseiten der Stirnseite des Zerspanungswerkzeugs 1000 einen Abzweigungswinkel kleiner als 90° ein.

Das Zerspanungswerkzeug 1000 ist aber nicht auf die in den Figuren 9 bis 12 gezeigte Bestückung mit den Schneidelementen 1 und dem Schneidelement 100 beschränkt. Denkbar und auch möglich ist es zum Beispiel, dass nur eine Bohrstufe vorgesehen ist oder dass mehr als zwei Bohrstufen vorgesehen sind, wobei die Schneidkörper der im Rahmen der vorliegenden Erfindung offenbarten Schneidelemente ein beliebige polygonale Form haben können.

## Patentansprüche

1. Schneidelement (1, 100) für ein Zerspanungswerkzeug (1000), wobei das Schneidelement (1, 100) einen Trägerkörper (2, 120) und einen Schneidkörper (3, 130) hat, wobei der Schneidkörper (3, 130) aus einem Schneidkörpermaterial besteht und der Trägerkörper (2, 120) aus einem Trägerkörpermaterial besteht, wobei das Schneidkörpermaterial von dem Trägerkörpermaterial verschieden ist, wobei der Schneidkörper (3, 130) eine freistehende Schneidkante (30, 131) hat, wobei der Trägerkörper (2, 120) zum reversibel lösbaren Verbinden mit einem Werkzeuggrundkörper (1100) und zum Einsetzen in einen Trägerkörpersitz (1600) des Werkzeuggrundkörpers (1000) ausgebildet ist, wobei der Schneidkörper (3, 130) eine Oberseite (32, 320), eine Unterseite (33, 330) und eine zwischen der Oberseite (32, 320) und der Unterseite (33, 330) umlaufende Seitenfläche (34, 340) hat, wobei die Oberseite (32, 320) von dem Trägerkörper (2, 120) abgewandt ist, wobei die Unterseite (33, 330) dem Trägerkörper (2, 120) zugewandt ist, wobei die Schneidkante (30, 131) durch einen Übergang von der Seitenfläche (34, 340) zur Oberseite (32, 320) gebildet ist, wobei der Schneidkörper (3, 130) mit dem Trägerkörper (2, 120) stoffschlüssig verbunden ist, wobei der Trägerkörper (2, 120) eine innere Trägerkanalstruktur (4) hat, wobei die Trägerkanalstruktur (4) eine Eintrittsöffnung (41) für einen Kühlmitteleintritt hat, wobei die Trägerkanalstruktur (4) einen mit der Eintrittsöffnung (41) fluidkommunizierenden Austrittskanal (42) hat und wobei der Austrittskanal (42) zur Kühlmittelversorgung des Schneidkörpers (3, 130) ausgebildet und angeordnet ist.

2. Schneidelement (1, 100) nach Anspruch 1, wobei der Austrittskanal (42) zumindest abschnittsweise räumlich gekrümmt verläuft.

3. Schneidelement (1, 100) nach Anspruch 1 oder 2, wobei der Austrittskanal (42) aufseiten der Schneidkante (30, 131) zum auf die Unterseite (33, 330) gerichteten Kühlmittelaustritt ausgebildet und angeordnet ist, wobei der Austrittskanal (42) eine Austrittsöffnung (43, 430) hat, wobei die Austrittsöffnung (43, 430) eine Öffnung (43, 430) des Trägerkörpers (2, 120) ist.

4. Schneidelement (1, 100) nach Anspruch 3, wobei der Austrittskanal (42) in eine Einbuchtung (26, 260) des Trägerkörpers (2, 120) mündet.

5. Schneidelement (1, 100) nach einem der vorhergehenden Ansprüche, wobei die Trägerkanalstruktur (4) einen weiteren Austrittskanal (44) hat, wobei der weitere Austrittskanal (44) zum Kühlmittelaustritt weg von dem Schneidkörper (3, 130) ausgebildet und angeordnet ist, wobei der weitere Austrittskanal (44) eine Austrittsöffnung (45) hat und wobei die Austrittsöffnung (45) des weiteren Austrittskanals (44) eine weitere Öffnung des Trägerkörpers (2, 120) ist.

6. Schneidelement (1, 100) nach Anspruch 5, wobei der weitere Austrittskanal (44) zumindest abschnittsweise räumlich gekrümmt verläuft.

7. Schneidelement (1, 100) nach Anspruch 5 oder 6, wobei der weitere Austrittskanal (44) eine innere Strömungsabrisskante (44c) hat.

8. Schneidelement (1, 100) nach einem der vorhergehenden Ansprüche, wobei der Schneidkörper (3, 130) in den Trägerkörper (2, 120) eingelassen angeordnet, so dass der Trägerkörper (2, 120) der Seitenfläche (34, 340) des Schneidkörpers (3, 130) zumindest abschnittsweise umfänglich folgt.

9. Schneidelement (1, 100) nach einem der vorhergehenden Ansprüche, wobei das Schneidkörpermaterial im Wesentlichen aus Diamantpartikeln besteht, wobei die Diamantpartikel aneinander gesintert sind.

10. Schneidelement (1, 100) nach einem der vorhergehenden Ansprüche, wobei der Trägerkörper (2, 120) eine außerhalb des Schneidkörpers (3, 130) ausgebildete Durchgangsausnehmung (21, 210) hat.

11. Schneidelement (1, 100) nach einem der vorhergehenden Ansprüche, wobei der Austrittskanal (4) zumindest abschnittsweise additiv hergestellt ist.

12. Zerspanungswerkzeug (1000), wobei das Zerspanungswerkzeug (1000) einen Werkzeuggrundkörper (1100) und mindestes ein Schneidelement (1, 100) nach einem der Ansprüche 1 bis 11 hat, wobei das Schneidelement (1, 100) in einem Trägerkörpersitz (1600) des Werkzeuggrundkörpers (1100) angeordnet ist, wobei der Trägerkörpersitz (1600) dem Trägerkörper (2, 120) zumindest abschnittsweise umfänglich folgend ausgebildet ist, wobei das Schneidelement (1, 100) mit dem Werkzeuggrundkörper (1100) reversibel lösbar verbunden ist, wobei der Werkzeuggrundkörper (1100) eine Grundkörperkanalstruktur (1700, 1800) hat, wobei die Trägerkanalstruktur (4) mit der Grundkörperkanalstruktur (1700, 1800) fluidkommunizierend verbunden ist.

13. Zerspanungswerkzeug (1000) nach Anspruch 12, wobei das Zerspanungswerkzeug (1000) als Aufbohrwerkzeug ausgebildet ist, wobei das Schneidelement (1, 100) zum Bearbeiten einer Bohrungsoberfläche angeordnet und ausgebildet ist.

14. Zerspanungswerkzeug (1000) nach Anspruch 13, wobei das Zerspanungswerkzeug (1000) als Aufbohrwerkzeug ausgebildete Zerspanungswerkzeug (1000) ein weiteres Schneidelement (1, 100) hat, wobei das weitere Schneidelement (1, 100) zum Bearbeiten einer durch das Schneidelement (1, 100) erzeugten Bohrungsoberfläche angeordnet und ausgebildet ist, wobei das weitere Schneidelement (1, 100) bezüglich einer Längsachse (1200) des als Aufbohrwerkzeug ausgebildeten Zerspanungswerkzeugs (1000) jeweils zum Schneidelement (1, 100) axial versetzt und radial weiter außen angeordnet ist.

15. Zerspanungswerkzeug (1000) nach einem der Ansprüche 12 bis 14, wobei das Zerspanungswerkzeug (1000) ein Befestigungselement (1500) hat, wobei das Befestigungselement (1500) in den Trägerkörper (2, 120) durchgeführt angeordnet ist und mit dem Werkzeuggrundkörper (1100) reversibel lösbar verbunden ist.
